# EUROPEAN PATENT APPLICATION

(11) **EP 2 081 317 A2**
(43) Date of publication of application: **22.07.2009**
(21) Application number: 09150722.8
(22) Date of filing: 16.01.2009
(51) Int. Cl.: H04L 9/08

(54) **Quantum key distribution system and method of performing quantum key distribution**

(30) Priority: 18.01.2008 US 9457
(71) Applicant: MagiQ Technologies, Inc., New York, NY 10016-5110 (US)
(72) Inventor: Beal, Alan Craig, New York, NY 10016-5110 (US)
(74) Representative: Molony, Anna

(57) **Abstract**

System and method for performing quantum key distribution (QKD) that allow for an improved signal-to-noise ratio (SNR) while compensating for optical path differences. The method includes generating at one QKD station (Alice) a train of quantum signals having a first wavelength and interspersing one or more strong optical control signals having a second wavelength in between the quantum signals. Only the quantum signals are modulated. The quantum and control signals are sent to Bob, where again only the quantum signals are modulated. The control signals are directed to two different photodetectors and the proportion of optical power detected represents the optical path difference between the first and second optical paths. This difference is then compensated for via an electrical PLA-element control signal sent to a path-length-adjusting (PLA) element in one of the optical paths.

## Description

The present invention relates to a quantum key distribution (QKD) system and to a method of performing quantum key distribution (QKD) between optically connected QKD stations.

QKD involves establishing a key between a sender ("Alice") and a receiver ("Bob") by using either single-photons or weak (e.g. 0.1 photon on average) optical signals (pulses) called "qubits" or "quantum signals" transmitted over a "quantum channel". Unlike classical cryptography whose security depends on computational impracticality, the security of quantum cryptography is based on the quantum mechanical principle that any measurement of a quantum system in an unknown state will modify its state. As a consequence, an eavesdropper ("Eve") that attempts to intercept or otherwise measure the exchanged qubits will introduce errors that reveal her presence.

The general principles of quantum cryptography were first set forth by Bennett and Brassard in their article "Quantum Cryptography: Public key distribution and coin tossing", Proceedings of the International Conference on Computers, Systems and Signal Processing, Bangalore, India, 1984, pp. 175-179 (IEEE, New York, 1984). Specific QKD systems are described in U.S. Patent No. 5,307,410 to Bennett ("the '410 patent") and in the article by C.H. Bennett entitled "Quantum Cryptography Using Any Two Non-Orthogonal States", Phys. Rev. Lett. 68 3121 (1992), both of which are incorporated by reference herein. The general process for performing QKD is described in the book by Bouwmeester et al., "The Physics of Quantum Information," Springer-Verlag 2001, in Section 2.3, pages 27-33 ("Bouwmeester"), which is incorporated by reference herein by way of background information.

The typical so-called "one way" QKD system, such as disclosed in the `410 patent, uses a "shared interferometer" consisting of a pair of unbalanced interferometers with precisely matched differential optical path lengths. The first unbalanced interferometer, located with Alice, splits a single photon into two spatially separated wave packets and the second unbalanced interferometer, located in Bob, brings the two wave packets together and interferes them. Because the two unbalanced interferometers are located remotely from each other, slight mismatches in the differential optical path lengths can arise from local environmental effects, including thermal fluctuations, acoustic noise, and vibrations. A mismatch in the differential optical path lengths result in a phase error that reduces the degree of interference of the single-photon-level optical pulses ("quantum pulses"). This in turn increases the quantum bit-error rate (QBER), which reduces the efficiency of the QKD process.

A one-way QKD system needs to be stabilized to maintain the optical path-length balance of Alice and Bob's shared interferometer to within a fraction of the wavelength (e.g. ~30 nm for 1.5 um light). Generally, this can be accomplished by passing "control" pulses (i.e. multi-photon "classical" optical pulses) through the shared interferometer at one QKD station (e.g. Alice) and detecting them at the output of the other QKD station (e.g. Bob). The QKD system is configured so that the classical optical pulses follow the same optical path traversed by the quantum pulses. Consequently, it is possible to monitor the phase error superimposed upon the qubits by observing the interference of the classical signals at the output of the interferometer. Using error signals generated by these interference patterns, it is possible to produce negative feedback for an actuator adapted to counteract this phase error. In response to the feedback signal, the actuator creates a compensating phase change at a single location (e.g. at Bob) to restore the optical path length balance. An example of an actively stabilized one-way QKD system is described in WIPO PCT Patent Application Publication No. WO2005067189 A1, entitled "Active stabilization of a one-way QKD system" published on July 21, 2005, which patent application is incorporated by reference herein.

One prior art approach to actively stabilizing a QKD system uses relatively weak (i.e. on the order of 25 photons) synchronous control signals of the same wavelength as the quantum signal. Since these classical control signals are at the same wavelength as the quantum signals, only time multiplexing can be used to separate them. The control signal intensity must be kept close to the single photon level when using gated-Geiger-mode avalanche photodiodes (APDs) as single photon detectors (SPDs). Since SPDs are still sensitive photo-detectors during the time intervals between gating pulses, any classical signals reaching them generate an enormous number of electrons, some of which become trapped in the APD junction and cause spontaneous avalanches as soon as gating pulses are applied. This causes a very high effective dark count rate. Because of its low intensity, the control signal must also be detected by its own, separate single photon detector(s). The control and quantum signal SPDs both share the same limitations so they are operated at the same repetition rate, namely, one stabilization pulse per quantum bit period.

Due to the binary output nature of single photon detectors, a meaningful feedback signal useful for compensating for interferometer phase drift can only be made by integrating over a relatively large number of samples (e.g. 100 samples). This increases the signal-to-noise ratio (SNR) at the expense of tracking bandwidth. For a qubit rate of 100KHz and a 100-sample integration time, the system can be compensated only to 1 ms, which corresponds to rather weak 1 KHz vibrations. If the vibration amplitude is stronger, the system may not be able to track it, which leads to an increase in the QBER.

Another prior art approach uses a separate wavelength for the control signal. This allows the use of higher power control pulses because wavelength filtering prevents these signals from arriving at the SPDs. Higher power control signals allow the use of linear detection of the control signal, relieving the need to integrate over many periods. However, this approach uses a control signal pulse rate significantly lower than the quantum signal pulse rate (by a factor of 1/10). While this may provide satisfactory operation for laboratory and experimental conditions, it does not provide sufficient bandwidth for a commercially viable QKD system that requires tracking high-frequency, high-amplitude vibrations, such as for example, those coupled into the interferometers by system fan noise.

Another prior art approach is to use a planar lightwave circuit (PLC) based unbalanced Mach-Zehnder interferometers for Alice and Bob's interferometers. Each interferometer is integrated onto a silica chip that is temperature stabilized to 0.01°C, which provides sufficient stability for low QBER. The main disadvantages of this approach, however, is the higher excess loss of these interferometers as compared to fiber-based interferometers, and the fact these components are not readily available and are difficult to manufacture.

According to a first aspect of the invention there is provided a quantum key distribution (QKD) system that provides a strong signal-to-noise ratio (SNR) for optical path length error correction, comprising:
a) a first QKD station (Alice) having:
   i. a quantum-signal light source adapted to generate a train of single-photon-level quantum signals having a first wavelength;
   ii. a first interferometer with a first optical path length and a first modulator gated to impart a randomly selected modulation only to the quantum signals;
   iii. a control-signal light source optically coupled to the first interferometer and adapted to provide thereto, in between adjacent quantum signals, one or more strong optical control signals having a second wavelength;
b) a second QKD station (Bob) having:
   i. a second interferometer optically coupled to the first interferometer and having a second optical path length, a second modulator gated to impart a randomly selected modulation only to the quantum signals, and a path-length-adjusting (PLA) member adapted to adjust the second optical path length in response to an electrical PLA-member control signal;
   ii. first and second photodetectors configured to detect the optical control signals, wherein a difference in optical power detected by the first and second photodetectors represents a difference in optical path length between the first and second interferometers; and
   iii. a controller operably coupled to the first and second photodetectors and adapted to measure said optical power difference and provide an electrical PLA-member control signal representative thereof to the PLA member to adjust the optical path length difference.

The PLA member is preferably an actuator.

The first and second interferometers preferably each include first and second optical fiber sections connected at respective first ends to respective Faraday mirrors and connected at respective second ends to respective optical splitters.

Preferably, Bob includes first and second single photon detectors (SPDs) configured to detect the quantum signals based on an overall modulation imparted to the quantum signals. Bob and Alice are preferably optically coupled via an optical fiber link.

Preferably, Alice includes a synchronization light source optically connected to the optical fiber link and that that generates synchronization signals, and wherein Bob includes a synchronization detector operably connected to the controller and adapted to detect the synchronization signals from Alice. Alice preferably includes a controller operably coupled to and adapted to control the operation of the quantum light source, the control light source and the first modulator.

According to a second aspect of the invention there is provided a method of performing quantum key distribution (QKD) between optically connected QKD stations Alice and Bob in a manner that provides a strong signal-to-noise (SNR) ratio for optical path length error correction, the method comprising:
at Alice:
generating a train of quantum signals at a first wavelength;
interspersing one or more strong optical control signals of a second wavelength between adjacent quantum signals;
imparting a first randomly selected modulation to the quantum signals but not to the optical control signals;
sending the quantum signals and optical control signals over a first optical path having an associated first optical path length and then transmitting the quantum signals and control signals to Bob;
at Bob:
sending the quantum signals over a second optical path having a second optical path length;
imparting a second randomly selected modulation to the quantum signals but not to the optical control signals;
directing the optical control signals to first and second photodetectors and detecting optical power therein, with a difference in the amount of power detected being representative of a difference in the first and second optical path lengths; and
reducing the difference in optical path length based on the representative difference in the first and second optical path lengths.

Preferably, reducing the difference in the optical path length includes using an actuator arranged in one of the first or second optical paths and adjusting the actuator with an electrical signal. Preferably, the method comprises forming the first and second optical paths from optical fibers.

According to a third aspect of the invention there is provided a method of performing quantum key distribution (QKD) between optically connected QKD stations Alice and Bob in a manner that provides a strong signal-to-noise (SNR) ratio for optical path length error correction, the method comprising:
at Alice, interspersing one or more strong optical control signals in between regularly spaced quantum signals; sending the quantum and control signals over a first optical path and randomly modulating just the quantum signals; and sending the quantum and optical control signals over to Bob; and
at Bob, directing the quantum and optical control signals over a second optical path and randomly modulating just the quantum signals to form twice-modulated quantum signals; detecting the optical control signals using first and second photodetectors so a difference in the amounts of optical power detected thereby represent an optical path difference between the first and second optical paths; and eliminating the optical path difference based on said optical power difference.

Preferably, the method includes using an optical splitter that directs the optical control signals to the first and second photodetectors in amounts relative to a phase difference experienced by the control signals at Alice and Bob.

The method preferably further includes forming the first and second optical paths with optical fiber sections that form respective first and second interferometers.

The method preferably further includes eliminating the optical path difference by sending an electrical actuator control signal to an actuator in one of the optical fiber sections.

Preferably the actuator resides in an optical fiber section at Bob.

Preferably each optical control signal includes at least about 1,000 photons.

The interferometers preferably each include two Faraday mirrors and an optical splitter.

The method preferably further includes about 50 or more optical control signals in between adjacent quantum signals.

Preferably the modulations are phase modulations.

The method preferably includes forming the quantum signals with a single-photon source.

The present invention is directed to systems and methods for performing quantum key distribution (QKD) that allow for an improved signal-to-noise ratio (SNR) when providing active compensation of the system's relative optical paths. The method includes generating a train of quantum signals having a first wavelength and interspersing at least one and preferably a relatively large number of strong optical control signals having a second wavelength in between the quantum signals. Only the quantum signals are modulated when the quantum and optical control signals travel over the first optical path at Alice. The quantum and control signals are sent to Bob, where only the quantum signals are modulated as both signal types travel over a second optical path at Bob. The control signals are directed to two different photodetectors by an optical splitter. The proportion of optical power detected by each photodetector represents the optical path difference (i.e. phase error) between the first and second optical paths. This difference is then compensated via an electrical PLA-member control signal sent to a path-length-adjusting (PLA) element in one of the optical paths. The strong optical control signals provide a high SNR that allows for commercially viable QKD system that can operate with a high qubit rate and a small qubit error rate (QBER) in the face of real-world sources of noise.

Example embodiments using a fiber-based, phase-modulated QKD system and a PLA element in the form of an actuator residing in a section of optical fiber and that can change the phase of light passing therethrough, are discussed in detail below.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

Embodiments of the invention will now be described in more detail, by way of example only, with reference to the accompanying drawings, in which:
FIG. 1 is a generalized schematic diagram of an actively compensated QKD system according to the present invention;
FIG.2 is a schematic diagram of an example embodiment of Alice of the QKD system of FIG. 1 for carrying out the active-stabilization method of the present invention;
FIG. 3 is a schematic diagram of an example embodiment of Bob of the QKD system of FIG. 1 for carrying out the active-stabilization method of the present invention; and
FIG. 4 is a schematic timing diagram of the optical signals as present on the input optical fiber section at Alice's interferometer, illustrating the relatively large number of optically strong control signals for each quantum signal so as to provide a large signal-to-noise ratio (SNR) when measuring the phase error and generating the feedback control signal to correct the measured phase error based on the optical power detected from the classical signals rather than via SPD "clicks".

The various elements depicted in the drawing are merely representational and are not necessarily drawn to scale. Certain sections thereof may be exaggerated, while others may be minimized. The drawing is intended to illustrate an example embodiment of the invention that can be understood and appropriately carried out by those of ordinary skill in the art. Where convenient, the same or like elements are given the same or like reference numbers.

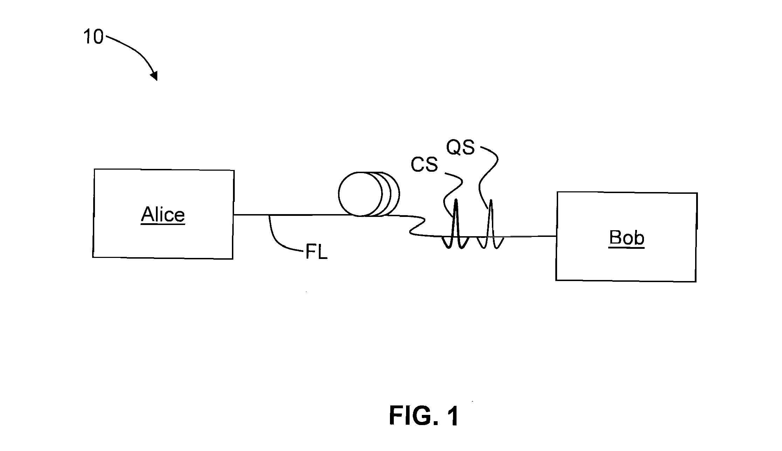

FIG. 1 is a schematic diagram of an actively stabilized QKD system 10 according to a first embodiment of the present invention. QKD system 10 includes a QKD station Alice and a QKD station Bob that are optically coupled. In the example embodiment of FIG.1, Alice and Bob are optically coupled by an optical fiber link FL. Alice and Bob communicate by encoded single-photon-level quantum signals QS having a wavelength λ_{Q}. The encoding may be any type of encoding that changes the state of the photon. Usually, polarization encoding or phase encoding is used, as described in Bouwmeester. The present invention applies to any type of encoding scheme and QKD system that requires active stabilization in order to maintain the qubit error rate (QBER) at an acceptable level. For example, in a polarization-based QKD system, a polarized control signal is sent over the optical fiber link FL and is used to determine changes in the polarization state over the QKD system optical path.

In the present invention, the active stabilization utilizes classical optical signals as control signals CS that have wavelength λ_{C} ≠ λ_{Q} so that strong control signals can be used, as described below.

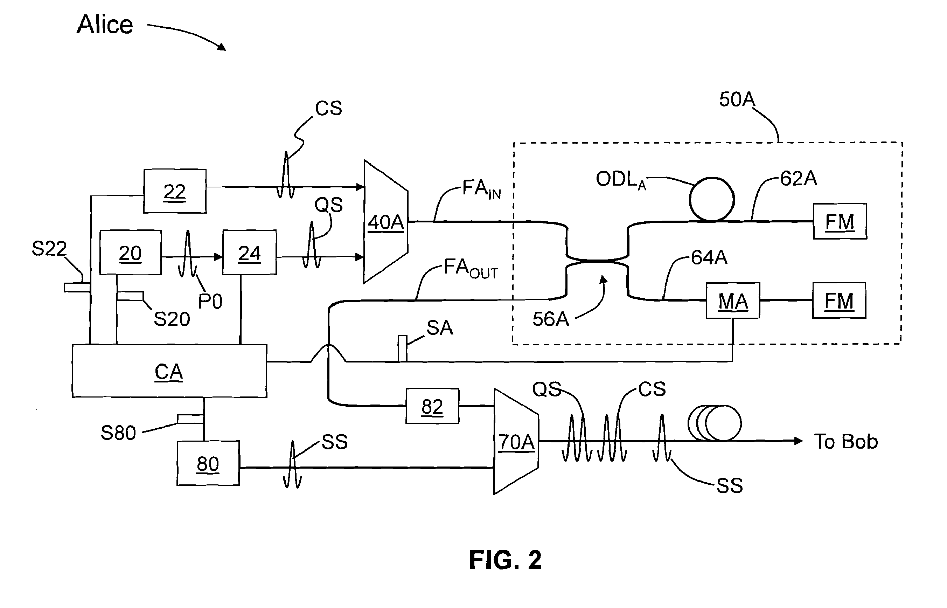

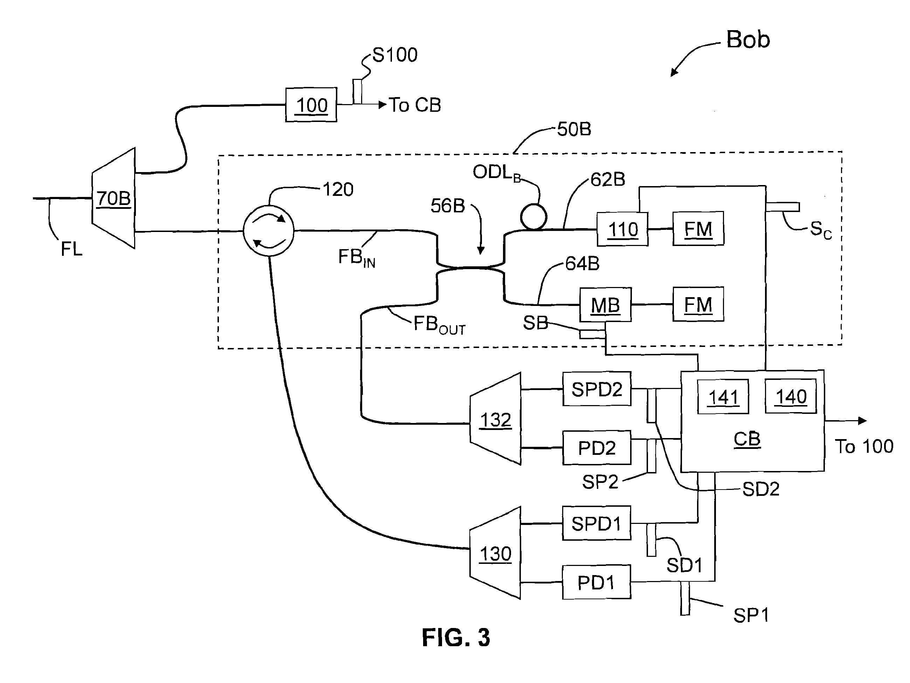

An example embodiment of the active-stabilization method of the present invention is now described in connection with a phase-based QKD system 10 as illustrated in FIGS. 2 and 3. As mentioned above and as will be apparent to one skilled in the art, the present invention applies to any actively compensated QKD system that employs optical signals separate from the quantum signals to measure system drift and to correct the drift.

With reference to FIG. 2, Alice includes a "quantum light source" 20 adapted to generate quantum signals QS of wavelength λ_{Q}. Alice also includes a classical (i.e. multi-photon control-signal) light source 22 adapted to generate control signals CS of wavelength λ_{C} that are used for compensating the shared interferometer, as discussed below.

In one example embodiment, quantum light source 20 is in the form of a pulsed laser that is optically coupled to an attenuator 24 that attenuates output laser pulses P₀ to create quantum signals QS in the form of weak pulses (i.e. one photon or less, according to Poissonian statistics). In another example embodiment, quantum light source 20 is a single-photon light source that generates true single-photon quantum signals QS (which in this case are the same as output laser pulses P₀). For the case where the output of quantum light source 20 is already at the single photon level, attenuator 24 is not needed.

Alice further includes a wavelength division multiplexer (WDM) 40A optically coupled to quantum light source 20 and to control-signal light source 22. WDM 40A is also optically coupled to Alice's unbalanced interferometer 50A via an input optical fiber section FA_{IN}. Interferometer 50A further includes an optical splitter 56A to which optical fiber section FA_{IN} is coupled and that forms two interferometer arms 62A and 64A that each includes a faraday mirror FM. A phase modulator MA is arranged in arm 64A and an optical delay loop ODL_{A} is arranged in arm 62A forming an associated first differential optical path length ΔL_{A} that can change due to environmental effects at Alice. The splitter 56A splits each input pulse and upon exiting the interferometer one of the pulses is time delayed by ΔT = 2·n·ΔL_{A}/C where n is the index of refraction of the fiber, c is the speed of light in vacuum, and the factor of "2" is the result of the double pass through the delay loop. Modulator MA is adapted to impart a randomly selected phase to the quantum signal QS as part of the QKD process. Interferometer 60A is optically coupled at optical splitter 56A to optical fiber link FL via an output optical fiber section FA_{OUT} and a second WDM 70A. A synchronization light source 80 is also optically coupled to optical fiber link FL via WDM 70A and generates synchronization signals SS that serve to synchronize the operation of Alice and Bob.

Alice also includes a controller CA that is electrically coupled to modulator MA, quantum light source 20, control-signal light source 22, synchronization light source 80 and optical attenuator 24, if such is present. An optical isolator 82 is arranged between optical splitter 56A and WDM 70A to ensure that light travels only one way from optical splitter 56A to WDM 70A.

With reference to FIG. 3, Bob includes a WDM 70B optically coupled at its input end to optical fiber link FL and at its output end to a synchronization detector 100 and to Bob's interferometer 50B. Detector 100 is used to detect synchronization signals SS.

Bob's interferometer 50B includes an optical splitter 56B that, like Alice, has associated therewith input and output optical fiber sections FB_{IN} and FB_{OUT}. Optical splitter 56B forms two interferometer arms 62B and 64B that each includes a Faraday mirror FM. Interferometer 60B has associated therewith a second differential optical path length ΔL_{B} formed by the presence of optical delay loop ODL_{B} arranged together with an electronically controlled path-length-adjusting (PLA) member 110 in arm 62B, such as an actuator. PLA member 110 is used to adjust the differential optical path length ΔL_{B} in response to an electrical feedback control signal S_{C}. A phase modulator MB is arranged in arm 64B and is used to impart a randomly selected phase to the quantum signal QS as part of the QKD process. Optical splitter 56B has two outputs, with one output going to a first SPD SPD1 and a first photodetector PD1 via fiber section FB_{IN}, a circulator 120 and a multiplexer 130. The other output goes to a second SPD SPD2 and a second photodetector PD2 via FB_{OUT} and multiplexer 132.

The differential optical path length ΔL_{B} of interferometer 50B is required to exactly match ΔL_{A} of interferometer 50A to ensure ideal interference of the quantum signals. The actual values of ΔL_{A} and ΔL_{B} can vary as a function of the different environmental effects at Alice and Bob. However, at least one of the optical paths (here the optical path at Bob) must be actively adjusted so that ΔL_{A}= ΔL_{B}.

Bob also has a controller CB, which in an example embodiment includes a processing unit 140, a computer readable medium 141, and other processing electronics (not shown) such as, for example, a field-programmable gate array (FPGA), adapted to control the operation of Bob (e.g. gating SPDs SPD1 and SPD2) in a manner that is synchronized with the operation of Alice. Controller CB is operably coupled to detectors SPD1, SPD2, PD1, PD2, synchronization detector 100, modulator MB, and PLA member 110. The instructions for controlling the operation of Bob can be stored, for example, on computer-readable medium 141, which in an example embodiment constitutes part of an FPGA.

With reference to FIG. 2 and FIG. 3, system 10 operates as follows. Controller CA sends an electrical control signal S80 to synchronization light source 80, which in response thereto emits synchronization signals SS. Synchronization signals SS are multiplexed onto optical fiber link FL via WDM 70A and travel over to Bob, where they are demultiplexed by WDM 70B and detected by sync detector 100. Sync detector 100 generates an electrical synchronization signal S100 that is received by Bob's controller CB and is processed by processing unit 140 to establish the system timing and synchronization.

Alice sends electrical control signals S20 and S22 to quantum light source 20 and control light source 22, respectively, to cause these light sources to generate respective quantum signals QS and optical control signals CS. Here, control signals CS are not relatively weak (e.g. tens of photons) but rather are relatively strong (e.g. a thousand, many thousands, tens of thousands or millions of photons per signal). The allowable intensity of these pulses is dependent on the isolation provided by multiplexers 130 and 132 (which serve as filters), as well as the responses of the two SPDs.

Quantum and control signals QS and CS enter WDM 40A and are multiplexed thereby and enter Alice's interferometer 50A. Interferometer 50A serves to split each optical pulse that enters it into two pulses separated by time delay ΔT = 2·n·ΔL_{A}/C where n is the index of refraction of the fiber, c is the speed of light in vacuum, and the factor of "2" is the result of the double pass in the delay loop. The quantum and control pulses then exit interferometer 50A via output fiber FA_{OUT}.

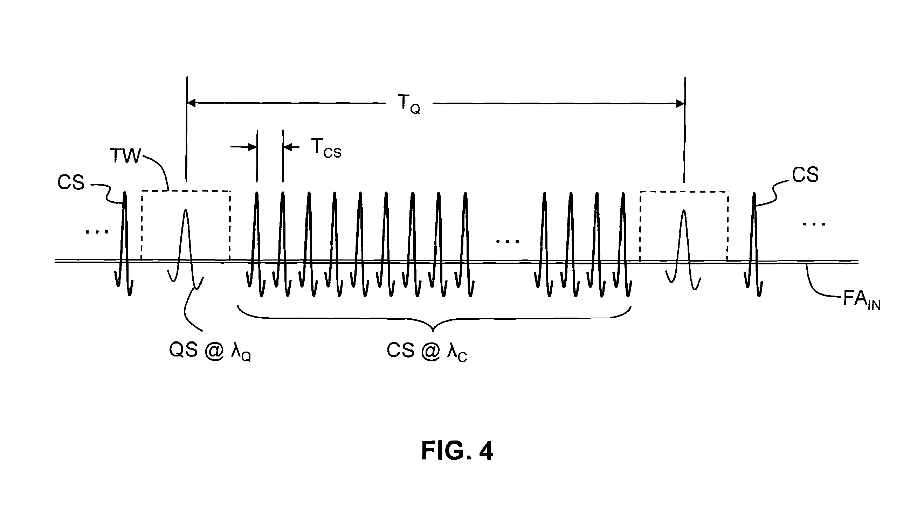

FIG. 4 is a schematic diagram illustrating the quantum and control signals QS and CS as multiplexed onto the input optical fiber section FA_{IN} of interferometer 50A. The quantum signals QS, with period T_{Q,} have a low duty cycle which allows one or more control signals CS to fit between each quantum signal QS and be synchronous therewith. In an example embodiment, a relatively large number of control signals CS (e.g. greater than about 50, and preferably between from 50 to 100) are used when the time interval between the quantum signals permits. The selection of the control signal pulse period T_{CS} is dependent on the time delay ΔT induced by interferometer 50A and in the cleanest implementation is set so that T_{CS} > 2·ΔT. This condition prevents one pulse from overlapping the previous delayed pulse upon exiting Alice's or Bob's interferometer.

Interferometer 50A also contains a phase modulator MA that is able to modulate the relative phase between any of the two time delayed pulses. For the security of the quantum key exchange it is vital that the phase modulation is applied only to the quantum signals. If the same phase encoding information were also imparted upon the control signals, then an eavesdropper could easily gain knowledge of the quantum key by measuring these classical signals while producing no indication of eavesdropping.

To prevent this, controller CA controls the output timing of the quantum and control signals QS and CS so that they do not overlap. Furthermore, the control signal transmission is interrupted for a brief period of time associated with the modulator activation at Alice and Bob called the modulator timing window TW (i.e. this signal lies outside of the timing window provided by modulator activation signal S_{A}). This is so that control signals CS are not passing through the modulators MA or MB while the modulators are being activated to modulate the quantum signal QS. Quantum signal QS thus becomes a once-modulated quantum signal QS' having received a phase modulation ϕ_{modA}. The total phase difference between the two time delayed quantum signal pulses exiting Alice is ΔΦ_{Q} = 4π·n·ΔL_{A}/λ_{Q} - ϕ_{modA}. The corresponding phase shift seen by the control signals which are not modulated is ΔΦ_{C} = 4π ·n·ΔL_{A}/λ_{C}.

Control signals CS and the associated once-modulated quantum signal QS' exit interferometer 50A on output optical fiber section FA_{OUT} and are optically coupled onto optical fiber link FL via WDM 70. The quantum signal QS and the associated control signals CS then travel over to Bob via optical fiber link FL.

The quantum signal QS and the associated control signals CS enter Bob's interferometer 50B via input optical fiber section FB_{IN}. The once-modulated quantum signal QS' is modulated again, receiving phase ϕ_{modB} by modulator MB via a corresponding timed modulator activation signal SB provided by controller CB, thereby forming a twice-modulated quantum signal QS". The total phase difference between the two interfering quantum pulses upon reaching coupler 56B and interfering is ΔΦ_{Q} = (4π·n·ΔL_{A}/A_{Q} - (ϕ_{modA}) - (4π·n·ΔL_{A}/A_{Q}- (ϕ_{modB}) = 4π·n·(ΔL_{A}/ΔL_{B} )/λ_{Q} + ϕ_{modB} - ϕ_{modA}. Again, the timing window TW leaves the control signals unmodulated so the phase difference between the interfering control pulses is simply ΔΦ_{C} = 4π·n·(ΔL_{A -} ΔL_{B} )/λ_{C}. The operation of the control signals CS ensures that ΔL_{A} - ΔL_{B} = 0 and remains stable, which is accomplished by maintaining ΔΦ_{C} at a constant value and checking the condition ΔΦ_{C} = ΔΦ_{Q} when ϕ_{modB} - ϕ_{modA} = 0.

Twice-modulated quantum signal QS" and the associated control signals CS exit interferometer 60B either via FB_{IN} or FB_{OUT}, depending on the overall phase modulation imparted to quantum signal QS". For constructive interference, quantum signal QS" is directed by optical splitter 56B via fiber section FB_{IN} to circulator 120, which directs this signal to WDM 130 and to SPD1. Upon detecting a photon, SPD1 in turn generates a first detection signal (click) SD1 that is provided to controller CB. Likewise, for destructive interference, quantum signal QS" is directed by optical splitter 56B to output optical fiber section FB_{OUT}, which directs this signal to WDM 132 and to SPD2. SPD2 in turn generates a second detection signal (click) SD2 that is provided to controller CB.

The many control signals CS associated with the quantum signal QS are directed equally by optical splitter 56B to FB_{IN} and FB_{OUT} and to photodetectors PD1 and PD2 associated therewith when OPL_{A} = OPL_{B}. To the extent OPL_{A} ≠ OPL_{B}, then the amount of optical power directed to photodetectors PD1 and PD2 depends on the relative phase difference imparted to the control signals CS as they traversed the two interferometers. Corresponding photodetector signals SP1 and SP2 are provided to controller CB and are representative of the corresponding amounts of optical power detected at photodetectors PD1 and PD2 from the control signals CS. The detected control signals are then used to establish the phase error between interferometers 50A and 50B and to generate control (feedback) signal SC that causes PLA member 110 to compensate for the measured phase error.

The relatively large optical power associated with control signals CS, combined with their relatively large number per quantum signal, provides a very high SNR for the control signals. Since these signals are used to generate electrical PLA-member control signals SC to PLA member 110 as feedback signals, the high SNR makes the feedback process more robust and thus is able to better maintain a high extinction ratio for the coupled interferometers 50A and 50B.

It will be apparent to those skilled in the art that various modifications and variations can be made to the present invention without departing from the scope of the invention. Thus it is intended that the present invention cover the modifications and variations of this invention provided they come within the scope of the appended claims and their equivalents.

## Claims

1. A quantum key distribution (QKD) system that provides a strong signal-to-noise ratio (SNR) for optical path length error correction, comprising:
a) a first QKD station (Alice) having:
i. a quantum-signal light source adapted to generate a train of single-photon-level quantum signals having a first wavelength;
ii. a first interferometer with a first optical path length and a first modulator gated to impart a randomly selected modulation only to the quantum signals;
iii. a control-signal light source optically coupled to the first interferometer and adapted to provide thereto, in between adjacent quantum signals, one or more strong optical control signals having a second wavelength;
b) a second QKD station (Bob) having:
i. a second interferometer optically coupled to the first interferometer and having a second optical path length, a second modulator gated to impart a randomly selected modulation only to the quantum signals, and a path-length-adjusting (PLA) member adapted to adjust the second optical path length in response to an electrical PLA-member control signal;
ii. first and second photodetectors configured to detect the optical control signals, wherein a difference in optical power detected by the first and second photodetectors represents a difference in optical path length between the first and second interferometers; and
iii. a controller operably coupled to the first and second photodetectors and adapted to measure said optical power difference and provide an electrical PLA-member control signal representative thereof to the PLA member to adjust the optical path length difference.

2. A QKD system as claimed in claim 1, wherein the PLA member is an actuator.

3. A QKD system as claimed in claim 1, wherein the first and second interferometers each include first and second optical fiber sections connected at respective first ends to respective Faraday mirrors and connected at respective second ends to respective optical splitters.

4. A QKD system as claimed in claim 1, wherein Bob includes first and second single photon detectors (SPDs) configured to detect the quantum signals based on an overall modulation imparted to the quantum signals.

5. A QKD system as claimed in claim 1, wherein Bob and Alice are optically coupled via an optical fiber link.

6. A QKD system as claimed in claim 5, wherein Alice includes a synchronization light source optically connected to the optical fiber link and that that generates synchronization signals, and wherein Bob includes a synchronization detector operably connected to the controller and adapted to detect the synchronization signals from Alice.

7. A QKD system as claimed in claim 1, wherein Alice includes a controller operably coupled to and adapted to control the operation of the quantum light source, the control light source and the first modulator.

8. A method of performing quantum key distribution (QKD) between optically connected QKD stations Alice and Bob in a manner that provides a strong signal-to-noise (SNR) ratio for optical path length error correction, the method comprising:
a) at Alice:
i. generating a train of quantum signals at a first wavelength;
ii. interspersing one or more strong optical control signals of a second wavelength between adjacent quantum signals;
iii. imparting a first randomly selected modulation to the quantum signals but not to the optical control signals;
iv. sending the quantum signals and optical control signals over a first optical path having an associated first optical path length and then transmitting the quantum signals and control signals to Bob;
b) at Bob:
i. sending the quantum signals over a second optical path having a second optical path length;
ii. imparting a second randomly selected modulation to the quantum signals but not to the optical control signals;
iii. directing the optical control signals to first and second photodetectors and detecting optical power therein, with a difference in the amount of power detected being representative of a difference in the first and second optical path lengths; and
iv. reducing the difference in optical path length based on the representative difference in the first and second optical path lengths.

9. A method of performing QKD as claimed in claim 8, wherein reducing the difference in the optical path length includes using an actuator arranged in one of the first or second optical paths and adjusting the actuator with an electrical signal.

10. A method of performing QKD as claimed in claim 8, including forming the first and second optical paths from optical fibers.

11. A method of performing QKD as claimed in claim 8, including using an optical splitter that directs the optical control signals to the first and second photodetectors in amounts relative to a phase difference experienced by the control signals at Alice and Bob.

12. A method of performing QKD as claimed in claim 11, further including eliminating the optical path difference by sending an electrical actuator control signal to an actuator in one of the optical fiber sections.

13. A method of performing QKD as claimed in claim 12, wherein the actuator resides in an optical fiber section at Bob.

14. A method of performing QKD as claimed in claim 11, wherein at least one of the first and second interferometers includes two Faraday mirrors and an optical splitter.

15. A method of performing QKD as claimed in claim 8, further including about 50 or more optical control signals in between adjacent quantum signals.
